# EUROPÄISCHE PATENTSCHRIFT

(11) **EP 1 714 054 B1**
(45) Veröffentlichungstag und Bekanntmachung des Hinweises auf die Patenterteilung: **01.04.2009**
(21) Anmeldenummer: 04803237.9
(22) Anmeldetag: 23.11.2004
(51) Int. Cl.: F16H 55/28, B23Q 5/02

(54) **LINEAR-ANTRIEB, INSBESONDERE ZAHNSTANGENANTRIEB**
LINEAR DRIVE, IN PARTICULAR A RACK AND PINION DRIVE
ENTRAINEMENT LINEAIRE, EN PARTICULIER ENTRAINEMENT A CREMAILLERE

(30) Priorität: 13.02.2004 DE 102004007448
(43) Veröffentlichungstag der Anmeldung: 25.10.2006
(73) Patentinhaber: Wittenstein AG, 97999 Igersheim (DE)
(72) Erfinder: BAYER, Thomas, 97999 Igersheim (DE); MICHEL, Frank, 97980 Bad Mergentheim (DE)
(74) Vertreter: Weiss, Peter
(86) Internationale Anmeldenummer: PCT/EP2004/013294
(87) Internationale Veröffentlichungsnummer: WO 2005/083303

(56) Entgegenhaltungen:
- DE-A1- 1 752 432
- US-A- 3 439 554
- US-A- 3 585 875
- US-A- 3 828 622
- US-A- 4 130 024
- US-A- 4 305 307
- US-A- 4 550 626

## Beschreibung

Die vorliegende Erfindung betrifft einen Linear-Antrieb, insbesondere Zahnstangenantrieb, mit zumindest einem Motorelement, welches an oder in einem Halteelement gelagert ist, wobei das Motorelement direkt oder indirekt ggf. über ein integriertes Getriebe ein Ritzel antreibt, welches mit einer Linearführung zusammenwirkt. Derartige Linear-Antriebe sind hinlänglich bekannt.

Herkömmliche Linear-Antriebe bzw. herkömmliche Zahnstangenantriebe sind in vielfältiger Form und Ausführung im Markt bekannt und gebräuchlich. Bei diesen wird, um ein Spiel eines Getriebes auszugleichen, über einen gemeinsamen Antriebsstrang mittels Motorelement und ggf. integriertes oder nachgeschaltetes Getriebe ein Ritzel angetrieben, welches mit einer Linearführung zusammenwirkt. Dabei besteht meistens zwischen Ritzel und Linearführung ein geringfügiges Spiel, insbesondere ein Zahnflankenspiel, sollte Ritzel und Linearführung flankenbehaftet sein.

Bei den herkömmlichen Linearantrieben bzw. Zahnstangenantrieben mit Ritzel und Zahnstange, ist eine Maschinengenauigkeit und eine Maschinendynamik erheblich vermindert, da bspw. Getriebesteifigkeiten schwanken. Zudem unterliegen die Zahnflanken vom Ritzel und Linearführung einem gewissen Verschleiss, was ebenfalls ein Spiel verursacht. Insbesondere wird der hohe Verschleiss sowie auch die Ungenauigkeit durch die mechanisch harte Vorspannung des Getriebes verursacht, wodurch sehr grosse Getriebe eingesetzt werden müssen.

Dabei ist eine Vorspannkraft auf das Ritzel keinesfalls konstant, da bspw. bei unterschiedlichen Belastungen, Geschwindigkeiten sowie auch Beschleunigungen und Ungenauigkeiten in der Linearführung ein unterschiedlicher Verschleiss verursacht wird bzw. von vornherein durch Fertigungsungenauigkeiten gegeben ist.

Ferner werden Ungenauigkeiten der Linearführung infolge bspw. Wärmedehnung nicht ausgeglichen, wobei unterschiedlicher Verschleiss an Linearführung und Ritzel verursacht wird. Heutzutage ist jedoch eine höhere Genauigkeit eines Linear-Antriebes, welcher gegenüber einer Linearführung verfahren oder einer Linearführung, die gegenüber dem feststehenden Linear-Antrieb bewegt wird, erforderlich. Dieses ist mit den herkömmlichen LinearAntrieben nicht zu gewährleisten.

Derartige Linear-Antriebe können bspw. Anwendung finden in sämtlichen Werkzeugmaschinen, Lasermaschinen, Fräsermaschinen, Holzbearbeitungslaser od. dgl..

Die US 3,828,622 offenbart eine Werkzeugmaschine, bei welcher ein Maschinentisch mittels eines angetriebenen Ritzels gegenüber einer Zahnstange hin und her bewegbar ist. Dabei wird die Zahnstange mittels einer Rolle über einen Hebel, der federbeaufschlagt ist, an das Ritzel angepresst.

Die DE 17 52 432 A beschreibt eine Vorrichtung zur Aufhebung eines Spiels im Getriebe von Rohrbiegemaschinen, bei welcher auf eine rein mechanische Weise über Langlöcher zwei Wellen zueinander verschiebbar sind.

Die US 4,305,307 offenbart, dass ein Spiel zwischen zwei Zahnrädern auf einer Zahnstange durch eine Torsionsfeder ausgleichbar ist.

In den Offenbarungen der US 4,550,626, US 3,585,875, US 4,130,024, US 3,439,554 sind jeweils Linearantriebe aufgezeigt, wobei ein Spielausgleich über Federelemente rein mechanisch erfolgt.

Ein Linearantrieb der o. g. Art ist aus der DE 693 06 422 T2 (EP 0 552 835 B1) bekannt, bei dem ein Abstand zwischen Ritzel und Linearführung veränderbar ist.

Der vorliegenden' Erfindung liegt die Aufgabe zugrunde einen Linear-Antrieb der eingangs genannten Art zu schaffen, mit welchem auf einfache, effektive und kostengünstige Weise eine wählbare Vorspannung des Ritzels gegenüber der Linearführung im Betrieb auch bei sich ändernden Lasten und Beschleunigungen möglich sein soll. Zudem soll der Motorstrombedarf reduziert werden, ein Verschleiss der Ritzel und Linearführung sowie der Getriebeelemente soll ebenfalls bei Erhöhung der Gesamtsteifigkeit reduziert werden können.

Zur Lösung dieser Aufgabe führen die Merkmale der unabhängigen Patentansprüche 1 und 2. Ausgestaltungen sind in den abhängigen Ansprüchen aufgeführt. Bei der vorliegenden Erfindung hat sich als besonders verteilhaft erwiesen, dass mittels eines Aktuators das Halteelement, welches der Aufnahmelagerung von Motor- und/oder Getriebeelementen dient und an welches bzw. an welche das Ritzel anschliesst, gegenüber einem festgelegten Aufnahmeelement bewegbar ist.

Dabei sind entsprechende Führungselemente vorgesehen, die als Linearführungen, vorzugsweise Blattfederelemente, Wälzführungen od. dgl., ausgebildet sein können, die eine gewisse Vorspannung bzw. eine wählbare Vorspannung im Betrieb permanent gewährleisten. Die gewählte Vorspannung kann permanent im Betrieb konstant gehalten werden, indem über entsprechende Kraft- und/oder Wegsensoren permanent die Kraft, die auf das Ritzel wirkt, gemessen und über die Aktuatoren nachgeregelt wird. Auf diese Weise lässt sich eine Vorspannkraft permanent im Betrieb konstant halten. Bevorzugt sind in der Einheit auch Kraftsensoren für Vorschub und/oder Vorspannkraft integriert, so dass einstellbar über die Aktuatoren im Betrieb ein Einfluss auf die Vorspannkraft genommen werden kann. Auch wird hierdurch gewährleistet, dass das Ritzel mit einer permanent konstanten wählbaren Vorspannkraft die Linearführung beaufschlagt, wobei die Vorspannkraft entsprechend last- und/oder beschleunigungs- und/oder geschwindigkeitsabhängig im Betrieb angepasst bzw. verändert wird. Hierdurch lässt sich eine Spielfreiheit bei einer erhöhten Maschinengenauigkeit und erhöhten Maschinendynamik gewährleisten, so dass eine höhere Maschinenperformance an bspw. Werkzeugmaschinen mit schnellen Vorschüben, wie bspw. Laserschneid- sowie Laserstanzmaschinen, gewährleistet werden kann. Ferner wird eine äusserst schmale Bauweise durch einen breiten Adaptionsbereich gewährleistet, der eine schnelle Montage im Betrieb bei minimalem Verschleiss und geringem Wartungsaufwand gewährleistet.

Durch einen relativ grossen Verstellweg lässt sich nicht nur die Spielfreiheit bei hohen Fertigungsabweichungen, Verschleiss und Wärmedehnungen erreichen, sondern auch die Montage durch Wegfall von Justierungen der Lage des Motorelementes und der Ausrichtung und Geradheit der Linearführung wesentlich erleichtern.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivisch dargestellte Seitenansicht eines erfindungsgemässen Linear-Antriebs;
Figur 2a eine weitere perspektivische Seitenansicht eines weiteren Ausführungsbeispiels eines Linear-Antriebs;
Figur 2b eine perspektivisch dargestellte Rückansicht des Linear-Antriebes gemäss Figur 2a.

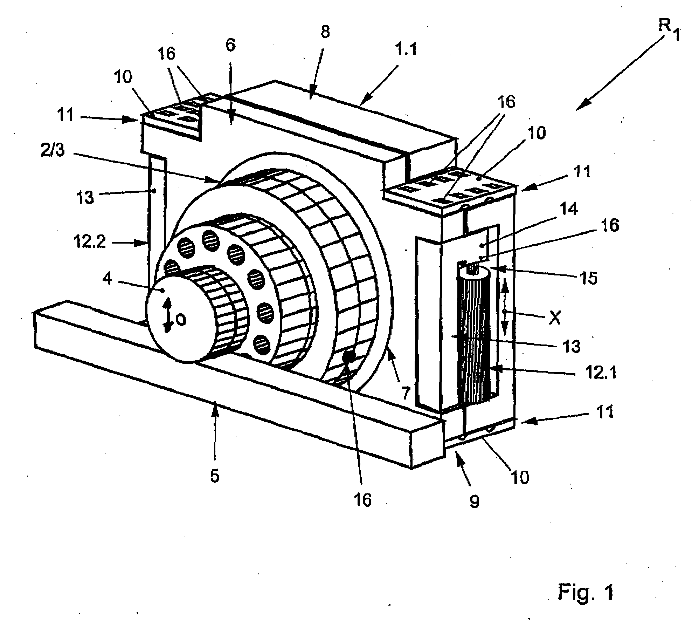

Gemäss Figur 1 weist ein erfindungsgemässer Linear-Antrieb R₁ ein Halteelement 1.1 auf, welches in etwa plattenartig ausgebildet ist und einer Aufnahme eines Motorelementes 2 mit ggf. nachgeschaltetem oder integriertem Getriebe 3 dient, welchem ein Ritzel 4 aufsitzt. Das Ritzel 4 wirkt mit einer Linearführung 5 zusammen bzw. kämmt diese. Das Ritzel 4 kann bspw. als Zahnrad ausgebildet sein und kämmt entsprechende Zahnflanken der Linearführung 5.

Im Rahmen der vorliegenden Erfindung soll jedoch liegen, dass bspw. der Linear-Antrieb R₁ gegenüber der Linearführung 5 bewegbar bzw. verfahrbar ist, indem das Ritzel 4 angetrieben wird oder der Linear-Antrieb R₁ bspw. an einem Maschinengestell oder beliebigen Untergrund festgelegt ist und die Linearführung 5 antreibt. Als Linearführung 5 können Zahnstangen, geradlinige Führungen, Kurvenbahnen oder sogar Kreisbahnen vorgesehen sein. Hierauf sei die Erfindung nicht beschränkt. Auch soll daran gedacht sein, dass bspw. lediglich über Reibschluss das Ritzel 4 mit der Linearführung 5 zusammenwirkt und den Linear-Antrieb R₁ oder die Linearführung 5 gegenüber dem Linear-Antrieb R₁ bewegt wird.

Im vorliegenden Ausführungsbeispiel durchgreift das Motorelement 2 und/oder Getriebe 3 mit aufsitzendem Ritzel 4 ein Aufnahmeelement 6 im Bereich einer Öffnung 7. Bevorzugt ist das Aufnahmeelement 6 ortsfest feststehend ausgebildet bzw. angeordnet. Dabei ist das Aufnahmeelement 6 plattenartig ausgebildet und liegt parallel dem Haltelement 1.1 dicht oder geringfügig beabstandet auf.

Im Bereich einer Oberseite 8 und im Bereich einer Unterseite 9 sind Halteelement 1.1 und Aufnahmeelement 6, vorzugsweise in jeweils seitlichen Bereichen, mit als Blattfederelemente 10 ausgebildeten Führungselementen 11 miteinander verbunden. Die Führungselemente 11 bzw. Blattfederelemente 10 lassen lediglich eine Linearführung 5 bzw. eine Bewegung des Halteelementes 1.1 gegenüber dem Aufnahmeelement 6, wie es in Doppelpfeilrichtung X dargestellt ist, zu.

Um das Halteelement 1.1 gegenüber dem Aufnahmeelement 6 linear in dargestellter Doppelpfeilrichtung X und damit das Motorelement 2 und/oder Getriebe 3 bzw, dessen Ritzel 4 gegenüber der Linearführung 5 in Doppelpfeilrichtung X linear hin- und herzubewegen, sitzt zumindest ein Aktuator 12.1, 12,2 über ein dem Aufnahmeelement 6 zugeordnetes Verbindungsstück 13 zwischen Halteelement 1.1 und Aufnahmeelement 6. Das Verbindungsstück 13 weist einen Flansch 14 auf, welcher zumindest teilweise in eine Ausnehmung 15 des Halteelementes 1.1 eingreift. Zwischen diesem Flansch 14 und einem hier nicht näher bezifferten Flansch des Halteelementes 1.1 ist der Aktuator 12.1, 12.2 vorzugsweise als Piezoaktor eingesetzt. Hierdurch lässt sich bspw. bei Ausdehnung das Ritzel 4 gegen die Linearführung 5 bewegen, um eine Spielfreiheit sowie eine Zweiflankenberührung permanent zu gewährleisten.

Damit die entsprechende Kraft bzw. Vorspannung exakt bestimmt werden kann, die als Vorspannkraft erforderlich ist, um eine permanente Spielfreiheit zwischen Ritzel 4 und Linearführung 5 zu gewährleisten, sind entsprechende Kraft- und/oder Wegsensoren 16 dem Führungselement 11 bzw. dem Blattfederelement 10 zugeordnet. Dabei können auch die entsprechenden Kraft- und/oder Wegsensoren 16 dem Verbindungsstück 13 und/oder dem Aktuator 12.1, 12.2 zugeordnet sein.

Auch soll im Rahmen der vorliegenden Erfindung liegen, dass zumindest ein Kraft- und/oder Wegsensor 16, der horizontale und vertikale Kräfte messen kann, dem Motorelement 2 und/oder Getriebe 3 zugeordnet sein kann, um unmittelbar permanent die Kraft zu ermitteln, die auf das Ritzel 4 bzw. auf das Halteelement 1.1 wirkt. Entsprechend sich ändernder Vorschübe bzw. Beschleunigungen lässt sich im Betrieb permanent und regelbar eine Vorspannkraft bzw. Vorspannung zwischen Ritzel 4 und Linearführung 5 zur Gewährleistung von Spielfreiheit und/oder Zweiflankenberührung anpassen, regeln und einstellen bzw. verändern.

Auf diese Weise lässt sich im Betrieb, bei bspw. sich ändernden Beschleunigungen oder Lasten bzw. anliegenden Lasten oder transportierten Lasten, die Vorspannkräfte zwischen Ritzel 4 und Linearführung 5 regeln, so dass immer eine spielfreie Verbindung zwischen Ritzel 4 und Linearführung 5 gewährleistet ist. Dies hat den Vorteil, dass sehr exakt und präzise sich der Linear-Antrieb R₁ gegenüber der Linearführung 5 oder die Linearführung 5 gegenüber dem festgelegten Linear-Antrieb R₁ bewegen lässt.

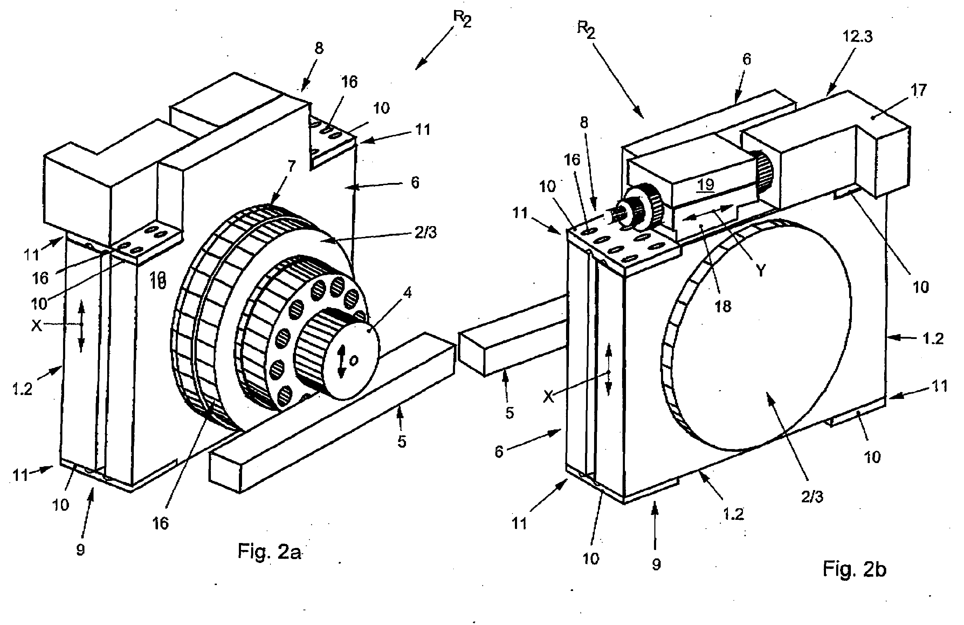

In dem Ausführungsbeispiel der vorliegenden Erfindung gemäss den Figuren 2a und 2b ist ein weiterer Linear-Antrieb R2 aufgezeigt, der im wesentlichen die o.g. Bauteile aufweist.

Anstelle der beidseitig eingesetzten Aktuatoren 12.1, 12.2 ist ein Aktuator 12.3 als Spindelantrieb 17 ausgeführt, welcher im Bereich einer Oberseite 8 vorzugsweise fest mit dem Halteelement 1.2 verbunden ist.

Das Halteelement 1.2 ist gegenüber dem Aufnahmeelement 6 geringfügig beabstandet. Halteelement 1.2 und Aufnahmeelement 6 sind über entsprechende Führungselemente 11, ausgebildet als Blattfederelemente 10, miteinander verbunden. Die Blattfederelemente 10 sind vorzugsweise in entsprechenden nicht näher bezifferten Flanschen von Halteelement 1.2 bzw. Aufnahmeelement 6 angeordnet und verbinden diese miteinander. Die Blattfederelemente 10 lassen eine Linearführung in dargestellter Doppelpfeilrichtung X gegeneinander zu, wobei im bevorzugten Ausführungsbeispiel das Aufnahmeelement 6 ortsfest ist. Anstelle der Blattfederelemente 10 als Führungselemente 11 können auch Linearführungen 5, schwalbenschwanzartige Linearführungen od. dgl. vorgesehen sein. Hierauf sei die Erfindung nicht beschränkt.

Der Spindelantrieb 17 steht mit einer Spindel und einem Keil 18 in Verbindung, der in dargestellter Y-Richtung hin- und herbewegbar ist. Der Keil 18 steht mit einem Flansch 19 in Verbindung, welcher im Bereich der Oberseite 8 in etwa lotrecht von dem Aufnahmeelement 6 abragt und fest mit diesem verbunden ist.

Durch Bewegen des Keiles 18 in dargestellter Doppelpfeilrichtung Y lässt sich das Haltelemente 1.2 in dargestellter Doppelpfeilrichtung X gegenüber dem Aufnahmeelement 6 hin- und herbewegen. Auf diese Weise lässt sich das Halteelement 1.2, Motorelement 2 und/oder Getriebe 3 mit anschließendem Ritzel 4 gegenüber einer Linearführung 5 in dargestellter Doppelpfeilrichtung X zur Gewährleistung einer Spielfreiheit und einer exakten Zweiflankenberührung aktiv antreibbar und im Betrieb regelbar hin- und herbewegen.

Auch hier sind dem Motorelement 2 und/oder Getriebe 3 Kraft- und/oder Wegsensoren 16 zugeordnet, die eine sich ändernde horizontale und vertikale Kraft im Betrieb des Ritzels 4 zur Linearführung 5 ermitteln. Durch diese Kraftermittlung lässt sich dann der entsprechende Aktuator 12.3 bzw. Spindelantrieb 17 betätigen, um bei sich ändernden Beschleunigungen, Lasten od. dgl. Parameter das Ritzel 4 bzw. das Haltelemente 1.2 gegenüber dem Aufnahmeelement 6 zu bewegen und somit eine Vorspannkraft zu verändern.

Dabei können auch die entsprechenden Blattfederelemente 10 mit Kraft- und/oder Wegsensoren 16 versehen sein, um die entsprechenden Kräfte oder Vorspannungen im Betrieb zu ermitteln und Vorspannkräfte durch Betätigen des Aktuators 12.3 auch im Betrieb zu regeln bzw. zu verändern.

Anstelle von Piezoaktoren oder Spindelantrieben mit Keil können auch Exzenter-, Kniehebel- oder Spindelantriebe mit Hebel zum Einsatz kommen. Hierauf sei die vorliegende Erfindung nicht beschränkt.

## Patentansprüche

1. Linear-Antrieb, insbesondere Zahnstangenantrieb, mit zumindest einem Motorelement (2), welches an oder in einem Halteelement (1.1) gelagert ist, wobei das Motorelement (2) direkt oder indirekt ggf. über ein integriertes Getriebe (3) ein Ritzel (4) antreibt, welches mit einer Linearführung (5) zusammenwirkt,
**dadurch gekennzeichnet, dass**
- das Halteelement (1.1) über zumindest einen Aktuator (12.1, 12.2) gegenüber einem Aufnahmeelement (6) und damit das Motorelement (2) und/oder Getriebe bzw. dessen Ritzel (4) gegenüber der Linearführung (5) linear hin- und her bewegbar ist, wobei
- das Halteelement (1.1) gegenüber dem Aufnahmeelement (6) über zumindest ein Führungselement (11) linear hin- und her bewegbar gekoppelt ist und wobei
- dem zumindest einen Führungselement (11) und/oder dem Aktuator (12.1, 12.2) und/oder einem Verbindungsstück (13), insbesondere im Bereich der Aufnahme des Aktuators (12.1, 12.2), und/oder Motorelement (2) und/oder Getriebe (3) zumindest ein Kraft- und/oder Wegsensor (16) zugeordnet ist.

2. Linear-Antrieb, insbesondere Zahnstangenantrieb, mit zumindest einem Motorelement (2), welches an oder in einem Halteelement (1.2) gelagert ist, wobei das Motorelement (2) direkt oder indirekt ggf. über ein integriertes Getriebe (3) ein Ritzel (4) antreibt, welches mit einer Linearführung (5) zusammenwirkt, **dadurch gekennzeichnet, dass** zur Gewährleistung einer permanenten Spielfreiheit und/oder permanenten Zweiflankenberührung zwischen Ritzel (4) und Linearführung (5) das Halteelement (1.2) nach einer Kraftermittlung in horizontaler und vertikaler Richtung über zumindest einen Aktuator (12.3) gegenüber einem Aufnahmeelement (6) bewegbar ist.

3. Linear-Antrieb nach Anspruch 1 oder 2, **dadurch gekennzeichnet, dass** das Führungselement (11) als Blattfederelement (10), Linearführung, Nadelrollenlager od.dgl. ausgebildet ist.

4. Linear-Antrieb nach wenigstens einem der Ansprüche 1 bis 3, **dadurch gekennzeichnet, dass** das Halteelement (1.1, 1.2) gegenüber dem Aufnahmeelement (6) geringfügig beabstandet ist und diese parallel zueinander angeordnet sind.

5. Linear-Antrieb nach Anspruch 3 oder 4, **dadurch gekennzeichnet, dass** jeweils in seitlichen Bereichen im Bereich einer Oberseite (8) und im Bereich einer Unterseite (9) des Halteelementes (1.1, 1.2) und des Aufnahmeelementes (6) Aufnahmeelement (6) und Halteelement (1) mittels jeweils Blattfederelementen (10) miteinander verbunden sind.

6. Linear-Antrieb nach Anspruch 1 und wenigstens einem der Ansprüche 3 bis 5, **dadurch gekennzeichnet, dass** in einem oder beiden seitlichen Bereichen des Aufnahmeelementes (6) ein Verbindungsstück (13) in eine Ausnehmung (15) des Halteelementes (1.1) zumindest teilweise eingreift und zwischen einem Flansch des Halteelementes (1.1) und dem Verbindungsstück (13) der zumindest eine Aktuator (12.1, 12.2) eingesetzt ist.

7. Linear-Antrieb nach wenigstens einem der vorhergehenden Ansprüche, **dadurch gekennzeichnet, dass** der Aktuator (12.1, 12.2) als Pieozoaktor, Formgedächtnisaktuator, elektrisch mechanisch oder hydraulisch betriebener Aktuator ausgebildet ist.

8. Linear-Antrieb nach wenigstens einem der Ansprüche 2 bis 7, **dadurch gekennzeichnet, dass** dem Halteelement (1.2) im Bereich einer Oberseite (8) ein Aktuator (12.3) als ein Spindelantrieb (17) zum linearen Bewegen eines Keiles (18) aufsitzt.

9. Linear-Antrieb nach Anspruch 8, **dadurch gekennzeichnet, dass** dem Aufnahmeelement (6) ein Flansch (19) zugeordnet ist, welcher mit dem Keil (18) des Spindelantriebes (17) des Halteelementes (1.2) zusammenwirkt.

10. Verfahren zum Betreiben eines Linear-Antriebes (R₁, R₂) nach wenigstens einem der Ansprüche 1 - 9, **dadurch gekennzeichnet**, das eine Vorspannkraft des Ritzels (4) gegenüber der Linearführung (5) durch permanente Kraftmessung an dem zumindest einen Führungselement (11) und/oder dem Aktuator (12.1 bis 12.3) und/oder dem Verbindungsstück (13) und/oder dem Motorelement/Getriebe in horizontaler und/oder vertikaler Richtung für die Ansteuerung der Aktuatoren (12.1, 12.2) bestimmt und/oder verändert und/oder geregelt wird.

11. Verfahren nach Anspruch 10, **dadurch gekennzeichnet, dass** die Vorspannkraft zwischen Ritzel (4) und Linearführung (5) beschleunigungsabhängig im Betrieb zur Gewährleistung einer permanenten Spielfreiheit und/oder permanenten Zweiflankenberührung zwischen Ritzel (4) und Linearführung (5) geregelt wird.

12. Verfahren nach Anspruch 10 oder 11, **dadurch gekennzeichnet, dass** über das zumindest eine Führungselement (11), insbesondere das Blattfederelement (10), eine Vorspannkraft über den zumindest einen Aktuator (12.1 bis 12.3) permanent eingestellt wird und im Betrieb bei sich ändernden Beschleunigungen und/oder Lasten und/oder Geschwindigkeiten die Vorspannkraft permanent verändert und/oder angepasst wird.

## Claims

1. Linear drive, in particular a rack drive, having at least one motor element (2) mounted at or in a supporting element (1.1), wherein the motor element (2) directly or indirectly activates a pinion (4) if applicable by means of an integrated gear (3), which pinion cooperates with a linear guiding (5),
**characterized in that**
- the supporting element (1.1) is linearly reciprocated by means of at least one actuator (12.1, 12.2) relative to a receiving element (6) and thus the motor element (2) and/or the gear and its pinion (4), respectively, relative to the linear guiding (5), wherein
- the supporting element (1.1) is linearly reciprocally coupled relative to the supporting element (6) by means of at least one guiding element (11), and wherein
- at least one force- and/or path sensor (16) is assigned to said at least one guiding element (11), and/or said actuator (12.1, 12.2) and/or a connecting piece (13), in particular in the area of the receptacle of the actuator (12.1, 12.2) and/or said motor element (2) and/or said gear (3).

2. Linear drive, in particular a rack drive, having at least one motor element (2) mounted at or in a supporting element (1.2), wherein the motor element (2) directly or indirectly activates a pinion (4) if applicable by means of an integrated gear (3), which pinion cooperates with a linear guiding (5), **characterized in that** for maintaining a permanent zero backlash and/or permanent two-flank contact between pinion (4) and linear guiding (5) said supporting element (1.2) is movable relative to a receiving element (6) by means of at least one actuator (12.3) after a determination of force in horizontal and vertical direction.

3. Linear drive according to claim 1 or 2, **characterized in that** the guiding element (11) is formed as flat spring element (10), linear guiding, needle roller bearing or such like.

4. Linear drive according to at least one of the claims 1 to 3, **characterized in that** the supporting element (1.1, 1.2) is slightly spaced relative to the receiving element (6), and these are arranged parallel to each other.

5. Linear drive according to claim 3 or 4, **characterized in that** in each lateral areas in the area of an upper side (8) and in the area of a lower side (9) of the supporting element (1.1, 1.2) and of the receiving element (6) said receiving element (6) and said supporting element (1) are respectively connected to each other by means of flat spring elements (10).

6. Linear drive according to claim 1 and at least one of the claims 3 to 5, **characterized in that** a connecting piece (13) at least partially engages a recess (15) of the supporting element (1.1) in one or both lateral areas of the receiving element (6), and the at least one actuator (12.1, 12.2) is inserted between a flange of the supporting element (1.1) and the connecting piece (13).

7. Linear drive according to at least one of the previous claims, **characterized in that** the actuator (12.1, 12.2) is formed as piezo actuator, shape memory actuator, electrically, mechanically or hydraulically operated actuator.

8. Linear drive according to at least one of the claims 2 to 7, **characterized in that** an actuator (12.3) as a spindle drive (17) for linearly moving a wedge (18) rests on the supporting element (1.2) in the area of an upper side (8).

9. Linear drive according to claim 8, **characterized in that** a flange (19) is assigned to the receiving element (6) cooperating with the wedge (18) of the spindle drive (17) of the supporting element (1.2).

10. Method for operating a linear drive (R₁, R₂) according to at least one of the claims 1 to 9, **characterized in that** a pretensioning force of the pinion (4) relative to the linear guiding (5) is determined and/or changed and/or controlled for actuating the actuators (12.1, 12.2) by a permanent power measurement at the at least one guiding element (11) and/or the actuator (12.1 to 12.3) and/or the connecting piece (13) and/or the motor element/gear in horizontal and/or vertical direction.

11. Method according to claim 10, **characterized in that** in operation the pretensioning force between pinion (4) and linear guiding (5) is controlled depending on acceleration for maintaining a permanent zero backlash and/or permanent two-flank contact between pinion (4) and linear guiding (5).

12. Method according to claim 10 or 11, **characterized in that** by means of the at least one guiding element (11), in particular the flat spring element (10) a pretensioning force is permanently adjusted by means of the at least one actuator (12.1 to 12.3) and in operation the pretensioning force is permanently changed and/or adapted with changing accelerations and/or loads and/or velocities.

## Revendications

1. Entraînement linéaire, en particulier entraînement à crémaillère, avec au moins un élément moteur (2) qui est monté sur ou dans un élément de maintien (1.1), l'élément moteur (2) entraînant directement ou indirectement, éventuellement par l'intermédiaire d'un engrenage intégré (3), un pignon (4) qui coopère avec un guide linéaire (5),
**caractérisé par le fait que**
- l'élément de maintien (1.1) peut être déplacé linéairement en va-et-vient, par l'intermédiaire d'au moins un actionneur (12.1, 12.2), par rapport à un élément de réception (6) et, de ce fait, l'élément moteur (2) et/ou l'engrenage ou son pignon (4) par rapport au guide linéaire (5),
- l'élément de maintien (1. 1) étant couplé de manière déplaçable linéairement en va-et-vient par rapport à l'élément de réception (6) par l'intermédiaire d'au moins un élément de guidage (11), et
- à l'au moins un élément de guidage (11) et/ou à l'actionneur (12.1, 12.2) et/ou à une pièce de connexion (13), en particulier dans la zone de réception de l'actionneur (12.1, 12.2), et/ou à l'élément moteur (2) et/ou à l'engrenage (3) étant associé au moins un capteur de force et/ou de trajet (16),

2. Entraînement linéaire, en particulier entraînement à crémaillère, avec au moins un élément moteur (2) qui est monté sur ou dans un élément de maintien (1.2), l'élément moteur (2) entraînant directement ou indirectement, éventuellement par l'intermédiaire d'un engrenage intégré (3), un pignon (4) qui coopère avec un guide linéaire (5),
**caractérisé par le fait que**
pour garantir une liberté de jeu permanente et/ou un contact permanent par deux flancs entre le pignon (4) et le guide linéaire (5), l'élément de maintien (1.2) peut être déplacé, après une détermination de force, dans le sens horizontal et vertical, par l'intermédiaire d'au moins un actionneur (12.3), par rapport à un élément de réception (6).

3. Entraînement linéaire selon la revendication 1 ou 2, **caractérisé par le fait que** l'élément de guidage (11) se présente sous forme d'élément ressort à lame (10), de guide linéaire, de roulement à aiguilles ou autre,

4. Entraînement linéaire selon au moins l'une des revendications 1 à 3, **caractérisé par le fait que** l'élément de maintien (1.1, 1.2) est légèrement distant par rapport à l'élément de réception (6) et que ces derniers sont disposés parallèlement l'un à l'autre.

5. Entraînement linéaire selon la revendication 3 ou 4, **caractérisé par le fait que** dans des zones latérales, à l'endroit d'une face supérieure (8) et à l'endroit d'une face inférieure (9) de l'élément de maintien (1.1, 1.2) et de l'élément de réception (6), l'élément de réception (6) et l'élément de maintien (1) sont reliés entre eux au moyen d'éléments ressorts à lame (10).

6. Entraînement linéaire selon la revendication 1 et au moins l'une des revendications 3 à 5, **caractérisé par le fait que**, dans une ou dans les deux zones latérales de l'élément de réception (6), une pièce de connexion (13) s'engage au moins partiellement dans un évidement (15) de l'élément de maintien (1.1) et qu'entre une bride de l'élément de maintien (1.1) et la pièce de connexion (13) est placé l'au moins un actionneur (12.1, 12.2).

7. Entraînement linéaire selon au moins l'une des revendications précédentes, **caractérisé par le fait que** l'actionneur (12.1, 12.2) se présente sous forme d'actionneur piézoélectrique, d'actionneur à mémoire de forme, d'actionneur à fonctionnement électrique, mécanique ou hydraulique.

8. Entraînement linéaire selon au moins l'une des revendications 2 à 7, **caractérisé par le fait que** sur l'élément de maintien (1.2) se trouve, à l'endroit d'une face supérieure (8), un actionneur (12.3) sous forme de broche de commande (17) pour le déplacement linéaire d'un coin (18).

9. Entraînement linéaire selon la revendication 8, **caractérisé par le fait qu'**à l'élément de réception (6) est associée une bride (19) qui coopère avec le coin (18) de la broche de commande (17) de l'élément de maintien (1.2).

10. Procédé pour faire fonctionner un entraînement linéaire (R₁, R₂) selon au moins l'une des revendications 1 à 9, **caractérisé par le fait qu'**une prétension du pignon (4) par rapport au guide linéaire (5) est déterminée et/ou modifiée et/ou réglée par une mesure de force permanente à l'au moins un élément de guidage (11) et/ou l'actionneur (12.1 à 12.3) et/ou la pièce de connexion (13) et/ou l'élément moteur/l'engrenage dans le sens horizontal et/ou verticale pour l'activation des actionneurs (12.1, 12.2).

11. Procédé selon la revendication 10, **caractérisé par le fait que** la force de prétension entre le pignon (4) et le guide linéaire (5) est réglé en fonctionnement en fonction de l'accélération pour garantir une liberté de jeu permanente et/ou un contact permanent par deux flancs entre le pignon (4) et le guide linéaire (5).

12. Procédé selon la revendication 10 ou 11, **caractérisé par le fait que** par l'intermédiaire de l'au moins un élément de guidage (11), en particulier l'élément ressort à lame (10), est réglé en permanence une force de prétension par l'intermédiaire de l'au moins un actionneur (12.1 à 12.3) et que la force de prétension est modifiée et/ou adaptée en permanence en fonctionnement en cas d'accélérations et/ou de charges et/ou de vitesses variantes.
